# EUROPÄISCHE PATENTSCHRIFT

(11) **EP 2 027 063 B1**
(45) Veröffentlichungstag und Bekanntmachung des Hinweises auf die Patenterteilung: **02.03.2011**
(21) Anmeldenummer: 07725284.9
(22) Anmeldetag: 16.05.2007
(51) Int. Cl.: C01B 7/04, B01J 23/46

(54) **VERFAHREN ZUR HERSTELLUNG VON CHLOR DURCH GASPHASENOXIDATION**
METHOD FOR PRODUCING CHLORINE BY GAS PHASE OXIDATION
PROCÉDÉ DE PRODUCTION DE CHLORE PAR OXYDATION EN PHASE GAZEUSE

(30) Priorität: 23.05.2006 DE 102006024521; 26.04.2007 DE 102007020140
(43) Veröffentlichungstag der Anmeldung: 25.02.2009
(73) Patentinhaber: Bayer MaterialScience AG, 51368 Leverkusen (DE)
(72) Erfinder: WOLF, Aurel, 42489 Wülfrath (DE); MLECZKO, Leslaw, 41542 Dormagen (DE); SCHUBERT, Stephan, 51375 Leverkusen (DE); SCHLÜTER, Oliver Felix-Karl, 51371 Leverkusen (DE)
(86) Internationale Anmeldenummer: PCT/EP2007/004368
(87) Internationale Veröffentlichungsnummer: WO 2007/134771

(56) Entgegenhaltungen:
- EP-A1- 1 170 250
- WO-A-2004/037718
- WO-A-2005/063616
- WO-A1-01/54806
- DE-A1- 2 324 164
- DE-A1- 10 235 476

## Beschreibung

Die vorliegende Erfindung betrifft ein Verfahren zur Herstellung von Chlor durch katalytische Gasphasenoxidation von Chlorwasserstoff mit Sauerstoff, worin die Umsetzung an mindestens zwei Katalysatorbetten unter adiabatischen Bedingungen durchgeführt wird.

Das von Deacon 1868 entwickelte Verfahren der katalytischen Chlorwasserstoffoxidation mit Sauerstoff in einer exothermen Gleichgewichtsreaktion stand am Anfang der technischen Chlorchemie:

4 HCl + O2 ⇒ 2 Cl2 + 2 H2O.

Durch die Chloralkalielektrolyse wurde die technische Anwendung des Deacon-Verfahrens jedoch stark in den Hintergrund gedrängt. Nahezu die gesamte Produktion von Chlor erfolgte durch Elektrolyse wässriger Kochsalzlösungen. Die Attraktivität des Deacon-Verfahrens nimmt jedoch in jüngster Zeit wieder zu, da der weltweite Chlorbedarf stärker wächst als die Nachfrage nach Natronlauge, ein Koppelprodukt der NaCl-Elektrolyse. Dieser Entwicklung kommt das Verfahren zur Herstellung von Chlor durch Oxidation von Chlorwasserstoff entgegen, das von der Natronlaugenherstellung entkoppelt ist. Darüber hinaus ist das Vorprodukt Chlorwasserstoff einfach zugänglich; es fällt in großen Mengen beispielsweise bei Phosgenierungsreaktionen, etwa bei der Isocyanat-Herstellung, als Koppelprodukt an.

Die Abführung und Verwendung der Reaktionswärme ist ein wichtiger Punkt bei der Durchführung des Deacon-Verfahren. Ein unkontrollierter Temperaturanstieg, der vom Anfang bis Abschluss der Deacon-Reaktion 600 bis 900 °C betragen könnte, würde zum einen zu einer dauerhaften Schädigung des Katalysators führen, zum anderen kommt es bei hohen Temperaturen zu einer ungünstigen Verschiebung des Reaktionsgleichgewichts in Richtung der Edukte mit einer entsprechenden Verschlechterung der Ausbeute. Es ist daher vorteilhaft die Temperatur der Katalysatorschüttung im Laufe des Verfahrens in einem Bereich von 150 bis 600 °C zu halten.

In etablierten Verfahren wird daher der Katalysator in Form eines fluidisierten, thermostabilisierten Bettes verwendet. Nach der EP 0 251 731 A2 wird das Katalysator-Bett dabei über die Außenwand temperiert, gemäß der DE 10 2004 006 610 A1 wird das fluidisierte Bett über einen im Bett angeordneten Wärmeüberträger temperiert. Der effektiven Wärmeabfuhr dieses Verfahrens stehen Probleme durch eine uneinheitliche Verweilzeitverteilung und Katalysatorabrieb gegenüber, die beide zu Umsatzeinbuße führen.

Eine enge Verweilzeitverteilung und geringer Katalysatorabrieb sind in Reaktoren mit stationären Katalysatorschüttungen möglich. Jedoch ergeben sich in solchen Reaktoren Probleme mit der Thermostatisierung der Katalysatorbetten. Im Allgemeinen werden daher thermostatisierte Rohrbündelreaktoren verwendet, welche, besonders bei großen Reaktoren, einen sehr aufwendigen Kühlkreislauf besitzen (WO 2004/052776 A1).

Um die Wärmeabfuhr aus der Katalysatorschüttung zu verbessern, wird im R&D-Report, "Sumitomo Kagaku", vol. 2004-I die Verwendung eines Festbettkatalysators aus Rutheniumoxid auf Titanoxid als Träger vorgeschlagen. Neben der hohen Katalysatoraktivität wird die gute Wärmeleitfähigkeit des Katalysatorsystems als Vorteil genannt. Da auch bei einer hohen Wärmeleitfähigkeit innerhalb der Katalysatorpellets die Wärmeleitfähigkeit der Schüttung gering bleibt, wird die Wärmeabfuhr durch diese Maßnahme jedoch nicht wesentlich verbessert.

In EP 1 170 250 A1 wurde vorgeschlagen, Katalysatorfüllungen in Rohrbündelreaktoren einzusetzen, die in unterschiedlichen Bereichen der gekühlten Kontaktrohre jeweils unterschiedliche Aktivitäten aufweisen. Dadurch wird der Reaktionsfortschritt soweit verlangsamt, dass die entstehende Reaktionswärme leichter über die Wand der Kontaktrohre abgeführt werden kann. Ein ähnliches Ergebnis soll durch die gezielte Verdünnung der Katalysatorschüttung mit inertem Material erreicht werden. Nachteilig an diesen Lösungen ist, dass zwei oder mehrere Katalysatorsysteme entwickelt und in den Kontaktrohren eingesetzt werden müssen bzw. dass durch Einsatz von inertem Material die Reaktorkapazität beeinträchtigt wird.

In den Offenlegungsschriften WO 2004/037718 und WO 2004/014845 wird zwar in allgemeiner Form die Möglichkeit einer adiabatischen katalytischen Chlorwasserstoff-Oxidation neben den bevorzugten isothermen Verfahren erwähnt. Konkrete Ausführungsformen einer adiabatisch geführten Chlorwasserstoff-Oxidation werden jedoch nicht beschrieben. Es bleibt somit völlig unklar, wie bei einer vollständig adiabatischen Fahrweise des Gesamtverfahrens die Reaktionswärme der exothermen Reaktion abgeführt und eine Beschädigung des Katalysators vermieden werden kann. Tatsächlich erfolgt die Chlorwasserstoff-Oxidation gemäß dieser Schriften jedoch isotherm als Festbettverfahren in Rohrbündelreaktoren, welche wie bereits erwähnt eine äußerst aufwändig zu steuernde Kühlung erfordern. Grundsätzlich sind auch alle beschriebenen Rohrbündelreaktoren sehr komplex und verursachen hohe Investitionskosten. Mit der Baugröße rasch ansteigende Probleme bezüglich mechanischer Festigkeit und gleichmäßiger Thermostatisierung der Katalysatorschüttung machen große Aggregate solchen Typs unwirtschaftlich.

Es wäre daher vorteilhaft, ein einfaches Verfahren bereitzustellen, das in einem einfachen Reaktor ohne aufwändiges System zur Wärmehaushaltung im Reaktor durchgeführt werden kann. Solche Reaktoren wären leicht in einen technischen Maßstab zu übertragen und sind in allen Größen preiswert und robust. Die Reaktionsenthalpie spiegelt sich bei diesem Reaktortyp in der Temperaturdifferenz zwischen Edukt- und Produktgasstrom quantitativ wieder.

Für die exotherme Gasphasenoxidation von Chlorwasserstoff mit einem Sauerstoff enthaltenen Gasstrom wird bisher weder die Verwendung solcher Reaktoren beschrieben, noch werden geeignete Katalysatoren und geeignete Verfahren aufgezeigt.

Die zunächst für das Deacon-Verfahren eingesetzten Katalysatoren, etwa geträgerte Katalysatoren mit der Aktivmasse CuCl2, wiesen nur eine geringe Aktivität auf. Durch eine Erhöhung der Reaktionstemperatur konnte zwar die Aktivität gesteigert werden, nachteilig war jedoch, dass die Flüchtigkeit der Aktivkomponenten bei höherer Temperatur zu einer schnellen Deaktivierung des Katalysators führte. Die Oxidation von Chlorwasserstoff zu Chlor ist zudem eine Gleichgewichtsreaktion. Die Lage des Gleichgewichts verschiebt sich mit zunehmender Temperatur zu Ungunsten des gewünschten Endproduktes.

Üblicherweise werden daher Katalysatoren mit möglichst hoher Aktivität eingesetzt, die die Reaktion bei niedriger Temperatur ablaufen lassen. Bekannte hochaktive Katalysatoren basieren auf Ruthenium. In DE-A 197 48 299 werden geträgerte Katalysatoren mit der Aktivmasse Rutheniumoxid oder Rutheniummischoxid beschrieben. Dabei beträgt der Gehalt an Rutheniumoxid 0,1 Gew.-% bis 20 Gew.-% und der mittlere Teilchendurchmesser von Rutheniumoxid 1,0 nm bis 10,0 nm. Die Reaktion wird bei einer Temperatur zwischen 90°C und 150°C durchgeführt. Weitere geträgerte Katalysatoren auf Basis von Ruthenium sind aus DE-A 197 34 412 bekannt: Rutheniumchloridkatalysatoren, die mindestens eine Verbindung aus Titanoxid oder Zirkoniumoxid enthalten, Ruthenium-Carbonyl-Komplexe, Rutheniumsalze anorganischer Säuren, Ruthenium-Nitosyl-Komplexe, Ruthenium-Amin-Komplexe, Rutheniumkomplexe organischer Amine oder Ruthenium-Acetylacetonat-Komplexe. Die Reaktion wird bei einer Temperatur zwischen 100°C und 500°C, bevorzugt 200°C und 380°C durchgeführt. In den beiden Anmeldungen DE-A 197 48 299 und DE-A 197 34 412 wird der Katalysator in einem Festbett oder in einem Fließbett verwendet. Als Sauerstoffausgangssubstanz wird Luft oder reiner Sauerstoff verwendet. Die Deacon-Reaktion bleibt aber eine exotherme Reaktion und eine Temperaturkontrolle ist auch bei der Anwendung solcher hochaktiven Katalysatoren erforderlich.

Es bestand daher die Aufgabe ein Verfahren zur katalytischen Oxidation von Chlorwasserstoff zu Chlor bereitzustellen, das in einem einfachen Reaktor ohne ein komplexes System zur Wärmehaushaltung im Reaktor durchführbar ist.

Die Erfinder der vorliegenden Erfindung fanden überraschend, dass es möglich ist, die vorstehend beschriebenen Aufgaben zu lösen, in dem man die Umsetzung an mindestens zwei hintereinander geschalteten Katalysatorbetten unter adiabatischen Bedingungen durchführt.

Die vorliegende Erfindung betrifft daher ein Verfahren zur Herstellung von Chlor durch katalytische Gasphasenoxidation von Chlorwasserstoff mit Sauerstoff, **dadurch gekennzeichnet, dass** die Umsetzung an mindestens zwei hintereinander geschalteten Katalysatorbetten unter adiabatischen Bedingungen durchgeführt wird.

Das Prozessgas kann neben Sauerstoff und Chlorwasserstoff noch Nebenbestandteile aufweisen, z. B. Stickstoff, Kohlendioxid, Kohlenmonoxid oder Wasser. Der Chlorwasserstoff kann vorgeschalteten Produktionsverfahren, z. B. zur Herstellung von Polyisocyanaten, entstammen und weitere Verunreinigungen, z. B. Phosgen, enthalten.

Erfindungsgemäß bedeutet die Durchführung des Verfahrens unter adiabatischen Bedingungen an den Katalysatorbetten, dass dem Katalysator in den jeweiligen Katalysatorbetten von außen im wesentlichen weder Wärme zugeführt noch Wärme entzogen wird (mit Ausnahme der Wärme die durch eintretendes bzw. austretendes Reaktionsgas zu- bzw. abgeführt wird). Technisch gelingt dies durch Isolation der Katalysatorbetten in an sich bekannter Weise. Erfindungswesentlich ist, dass die einzelnen Katalysatorbetten adiabatisch betrieben werden, in ihnen also insbesondere keine Mittel der Wärmeabfuhr vorgesehen sind. Betrachtet man das Verfahren als Ganzes, so ist erfindungsgemäß auch der Fall eingeschlossen, bei dem die Reaktionswärme beispielsweise mittels zwischen den einzelnen Katalysatorbetten geschalteten Wärmetauschern abgeführt wird.

Die Vorteile der erfindungsgemäßen adiabatischen Fahrweise der Katalysatorbetten gegenüber der konventionellen isothermen Fahrweise bestehen vor allem, darin, dass in den Katalysatorbetten keine Mittel zur Wärmeabfuhr bereitgestellt werden müssen, was eine erhebliche Vereinfachung der Konstruktion mit sich bringt. Dadurch ergeben sich insbesondere Vereinfachungen bei der Fertigung des Reaktors sowie bei der Skalierbarkeit des Verfahrens.

Unter Katalysatorbett wird hier eine Anordnung des Katalysators in allen an sich bekannten Erscheinungsformen, z.B. Festbett, Fließbett oder Wirbelbett verstanden. Bevorzugt ist eine Festbettanordnung. Diese umfasst eine Katalysatorschüttung im eigentlichen Sinn, d. h. losen, geträgerten oder ungeträgerten Katalysator in beliebiger Form sowie in Form von geeigneten Packungen:

Der Begriff der Katalysatorschüttung, wie er hier verwendet wird, umfasst auch zusammenhängende Bereiche geeigneter Packungen auf einem Trägermaterial oder strukturierte Katalysatorträger. Dies wären z.B. zu beschichtende keramische Wabenträger mit vergleichsweise hohen geometrischen Oberflächen oder gewellte Schichten aus Metalldrahtgewebe, auf denen beispielsweise Katalysatorgranulat immobilisiert ist.

In dem neuen Verfahren werden bevorzugt stationäre Katalysatorbetten verwendet.

Eine bevorzugte weitere Ausführung des Verfahrens ist dadurch gekennzeichnet gekennzeichnet, dass das aus mindestens einem Katalysatorbett austretende Prozessgasgemisch anschließend über wenigstens einen dem Katalysatorbett nachgeschalteten Wärmetauscher geleitet wird.

In einer besonders bevorzugten weiteren Ausführung des Verfahrens befindet sich nach jedem Katalysatorbett wenigstens ein, bevorzugt ein Wärmetauscher, über den das austretende Prozessgasgemisch geleitet wird.

In einer bevorzugten Ausführungsform befindet sich wenigstens hinter einem Katalysatorbett wenigstens ein Wärmetauscher. Besonders bevorzugt befindet sich hinter jedem der Katalysatorbetten mindestens ein, noch bevorzugter jeweils genau ein Wärmetauscher, über den das aus dem Katalysatorbett austretende Gasgemisch geleitet wird.

Bevorzugt können für das Verfahren auch mehr als zwei Katalysatorbetten hintereinander geschaltet werden, insbesondere bis zu 12, bevorzugt bis zu 8 Katalysatorbetten. Besonders bevorzugt sind Verfahren mit 3 bis 8 hintereinander geschalteten Katalysatorbetten.

Die Katalysatorbetten können dabei entweder in einem Reaktor angeordnet oder in mehreren Reaktoren aufgeteilt angeordnet werden. Die Anordnung der Katalysatorbetten in einem Reaktor führt zu einer Verringerung der Anzahl der verwendeten Apparaturen.

Zusätzlich können einzelne der in Reihe geschalteten Katalysatorbetten unabhängig voneinander auch durch eine oder mehrere parallel geschaltete Katalysatorbetten ersetzt oder ergänzt werden. Die Verwendung von parallel geschalteten Katalysatorbetten erlaubt insbesondere deren Austausch bzw. Ergänzung bei laufendem kontinuierlichen Gesamtbetrieb des Verfahrens.

Das erfindungsgemäße Verfahren weist aber mindestens zwei hintereinander geschaltete Katalysatorbetten auf. Parallele und hintereinander geschaltete Katalysatorbetten können insbesondere auch miteinander kombiniert sein. Besonders bevorzugt weist das erfindungsgemäße Verfahren aber ausschließlich hintereinander geschaltete Katalysatorbetten auf.

Werden parallel geschaltete Katalysatorbetten verwendet, so werden insbesondere maximal 5, bevorzugt 3, besonders bevorzugt maximal 2 gegebenenfalls aus hintereinander geschalteten Katalysatorbetten bestehenden Verfahrensstränge parallel geschaltet. Das neue Verfahren kann demnach zum Beispiel mit bis zu 60 und wenigstens mit zwei Katalysatorbetten betrieben werden.

Die im erfindungsgemäßen Verfahren bevorzugt verwendeten Reaktoren können aus einfachen Behältern mit einer oder mehreren thermisch isolierten Katalysatorbetten bestehen, wie sie z.B. in Ullmanns Encyclopedia of Industrial Chemistry (Fifth, Completely Revised Edition, Vol B4, Seite 95-104, Seite 210-216) beschrieben werden. D.h. es können z.B. einfache oder mehrstufige Festbettreaktoren, Radial-Flow-Reaktoren oder auch Flachbettreaktoren ("Shallow-bed reactors") sein. Rohrbündelreaktoren werden wegen der vorstehend beschriebenen Nachteile jedoch bevorzugt nicht verwendet. Da eine Abfuhr der Wärme erfindungsgemäß aus den Katalysatorbetten nicht erfolgt, sind derartige Reaktortypen für die Aufnahme der Katalysatorbetten auch entbehrlich.

Die Katalysatoren bzw. die Katalysatorbetten daraus werden in an sich bekannter weise auf oder zwischen gasdurchlässigen Wandungen des Reaktors angebracht. Insbesondere bei dünnen Katalysatorbetten werden oberhalb, unterhalb oder oberhalb und unterhalb der Katalysatorbetten technische Vorrichtungen zur gleichmäßigen Gasverteilung angebracht. Dies können Lochplatten, Glockenböden, Ventilböden oder andere Einbauten sein, die durch Erzeugung eines geringen, aber gleichmäßigen Druckverlusts einen gleichförmigen Eintritt des Gases in das Katalysatorbett bewirken.

Die Lehrrohrgeschwindigkeit des Gases im Katalysatorbett beträgt im Falle der Ausführungsform unter Verwendung eines Festbettes vorzugsweise von 0.1 bis 10 m/s.

Bei einer besonderen Ausführungsform des erfindungsgemäßen Verfahrens wird vorzugsweise ein molares Verhältnis von zwischen 0,25 bis 10 Äquivalenten Sauerstoff pro Äquivalent Chlorwasserstoff vor Eintritt in das Katalysatorbett verwendet. Durch eine Erhöhung des Verhältnisses von Äquivalenten Sauerstoff pro Äquivalent Chlorwasserstoff kann zum einen die Reaktion beschleunigt und somit die Raumzeitausbeute (Produzierte Chlormenge pro Reaktorvolumen) gesteigert werden, zum anderen wird das Gleichgewicht der Reaktion positiv in Richtung der Produkte verschoben.

In einer weiteren besonders bevorzugten Ausführung des Verfahrens beträgt die Eingangstemperatur des in ein erstes Katalysatorbett eintretenden Gasgemisches von 150 bis 400 °C, bevorzugt von 200 bis 370 °C.

Der Chlorwasserstoff und Sauerstoff enthaltende Einsatz-Gasstrom kann auch bevorzugt nur vor dem ersten Katalysatorbett zugeführt werden. Dies hat den Vorteil, dass der gesamte Einsatz-Gasstrom für die Aufnahme und Abfuhr der Reaktionswärme in allen Katalysatorbetten genutzt werden kann. Es ist aber auch möglich vor einer oder mehreren der nach dem ersten Katalysatorbett folgenden Katalysatorbetten nach Bedarf Chlorwasserstoff und/oder Sauerstoff in den Gasstrom einzudosieren. Über die Zufuhr von Gas zwischen den eingesetzten Katalysatorbetten kann zusätzlich die Temperatur der Umsetzung gesteuert werden.

In einer besonders bevorzugten Ausführungsform des erfindungsgemäßen Verfahrens wird das Reaktionsgas nach mindestens einem der verwendeten Katalysatorbetten, besonders bevorzugt nach jedem der verwendeten Katalysatorbetten abgekühlt. Dazu leitet man das Reaktionsgas durch einen oder mehrere Wärmetauscher, die sich hinter den jeweiligen Katalysatorbetten befinden. Dies können die dem Fachmann bekannten Wärmetauscher, wie z.B. Rohrbündel-, Platten- Ringnut-, Spiral-, Rippenrohr-, Mikrowärmetauscher sein. In einer besonderen Ausführung des Verfahrens wird beim Abkühlen des Produktgases an den Wärmetauschern Dampf erzeugt.

In einer bevorzugten Ausführungsform des Verfahrens werden die nacheinander geschalteten Katalysatorbetten bei von Katalysatorbett zu Katalysatorbett steigender oder sinkender Durchschnittstemperatur betrieben. Dies bedeutet, dass man innerhalb einer Folge von Katalysatorbetten die Temperatur von Katalysatorbett zu Katalysatorbett sowohl ansteigen als auch absinken lassen kann. So kann es besonders vorteilhaft sein, die Durchschnittstemperatur zunächst von Katalysatorbett zu Katalysatorbett zur Erhöhung der Katalysatoraktivität ansteigen zu lassen und anschließend zur Verschiebung des Gleichgewichts die Durchschnittstemperatur in den folgenden letzten Katalysatorbetten wieder absinken zu lassen. Dies kann beispielsweise über die Steuerung der zwischen die Katalysatorbetten geschalteten Wärmetauscher eingestellt werden. Weitere Möglichkeiten der Einstellung der Durchschnittstemperatur werden weiter unten beschrieben.

In einem bevorzugten dem neuen Verfahren nachgeordneten Schritt wird das gebildete Chlor abgetrennt. Der Abtrennschritt umfasst üblicherweise mehrere Stufen, nämlich die Abtrennung und ggf. Rückführung von nicht umgesetztem Chlorwasserstoff aus dem Produktgasstrom der katalytischen Chlorwasserstoff-Oxidation, die Trocknung des erhaltenen, im wesentlichen Chlor und Sauerstoff enthaltenden Stroms sowie die Abtrennung von Chlor aus dem getrockneten Strom.

Die Abtrennung von nicht umgesetztem Chlorwasserstoff und von gebildetem Wasserdampf kann durch Auskondensieren von wässriger Salzsäure aus dem Produktgasstrom der Chlorwasserstoffoxidation durch Abkühlung erfolgen. Chlorwasserstoff kann auch in verdünnter Salzsäure oder Wasser absorbiert werden.

In einer bevorzugten Ausführung des Verfahrens werden nicht umgesetzter Chlorwasserstoff und/oder Sauerstoff nach Abtrennung von Chlor und Wasser aus dem Produktstrom und nach Abzweigen einer geringen Gasmenge zum Konstanthalten von gasförmigen Komponenten, die z. T. mit den Edukten eingeschleppt werden, der Reaktion wieder zugeführt. Der zurückgeführte Chlorwasserstoff und/oder Sauerstoff werden vor einem oder mehreren der Katalysatorbetten zurückgeführt und vorher gegebenenfalls mittels eines Wärmetauschers wieder auf Eingangstemperatur gebracht. Vorteilhaft verwirklicht man das Abkühlen des Produktgases und das Aufwärmen des zurückgeführten Chlorwasserstoff und/oder Sauerstoff indem man die Gasströme im Gegenstrom durch Wärmeaustauscher aneinander vorbeiführt.

Das neue Verfahren wird bevorzugt bei einem Druck von 1 bis 30 bar, bevorzugt von 1 bis 20 bar, besonders bevorzugt von 1 bis 15 bar betrieben.

Die Temperatur des Eduktgasgemisches beträgt bevorzugt vor jedem der Katalysatorbetten von 150 bis 400 °C, bevorzugt von 200 bis 370 °C, besonders bevorzugt von 250 bis 350 °C. Das Gasgemisch ist bevorzugt vor Eintritt in das einzelne Katalysatorbett homogenisiert.

Die Dicke der durchströmten Katalysatorbetten kann gleich oder verschieden gewählt werden, und beträgt zweckmäßig 1 cm bis 8 m, bevorzugt 5 cm bis 5 m, besonders bevorzugt 30 cm bis 2,5 m.

Der Katalysator wird bevorzugt auf einem Träger immobilisiert verwendet. Der Katalysator enthält bevorzugt mindestens eines der folgenden Elemente: Kupfer, Kalium, Natrium, Chrom, Cer, Gold, Bismut, Ruthenium, Rhodium, Platin, sowie die Elemente der VIII. Nebengruppe des Periodensystems der Elemente. Diese werden bevorzugt als Oxide, Halogenide, oder gemischte Oxide/Halogenide, insbesondere Chloride bzw. Oxide/Choride verwendet. Diese Elemente bzw. Verbindungen daraus können allein oder in beliebiger Kombination verwendet werden.

Bevorzugte Verbindungen dieser Elemente schließen ein: Kupferchlorid, Kupferoxid, Kaliumchlorid, Natriumchlorid, Chromoxid, Bismutoxid, Rutheniumoxid, Rutheniumchlorid, Rutheniumoxychlorid, Rhodiumoxid.

Besonders bevorzugt besteht der Katalysatoranteil vollständig oder teilweise aus Ruthenium bzw. Verbindungen daraus, besonders bevorzugt besteht der Katalysator aus Halogenid und/oder Sauerstoff-enthaltenden Ruthenium-Verbindungen.

Der Trägeranteil kann vollständig oder teilweise bestehen aus: Titanoxid, Zinnoxid, Aluminiumoxid, Zirkoniumoxid, Vanadiumoxid, Chromoxid, Siliziumoxid, Kieselerde, Kohlenstoffnanoröhren oder einer Mischung oder Verbindung der genannten Stoffe, wie insbesondere Mischoxiden, wie Silizium-Aluminium-Oxiden. Besonders bevorzugte Trägermaterialien sind Zinnoxid und Kohlenstoffnanoröhren.

Die Rutheniumträgerkatalysatoren können beispielsweise durch Tränkung des Trägermaterials mit wässrigen Lösungen von RuCl₃ und gegebenenfalls eines Promotors zur Dotierung erhalten werden. Die Formgebung des Katalysators kann nach oder bevorzugt vor der Tränkung des Trägermaterials erfolgen.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls calciniert werden. Bevorzugt werden die Formkörper zunächst bei 100 bis 150°C getrocknet und anschließend bei 200 bis 400°C calciniert.

Die Temperatur des Katalysators in den Katalysatorbetten liegt zweckmäßig in einem Bereich von 150 °C bis 800 °C, bevorzugt 200 °C bis 450 °C, besonders bevorzugt 250 °C bis 400 °C. Die Steuerung der Temperatur in den Katalysatorbetten erfolgt bevorzugt durch mindestens eine der folgenden Maßnahmen:
- Dimensionierung der Katalysatorbetten,
- Steuerung der Wärmeabfuhr zwischen den Katalysatorbetten,
- Zusatz von Einsatzgasen zwischen den Katalysatorbetten,
- Molares Verhältnis der Edukte,
- Konzentrationen der Edukte
- Zusatz von Inertgasen, insbesondere Stickstoff, Kohlendioxid, vor und/oder zwischen den Katalysatorbetten

Prinzipiell können die Katalysatoren bzw. die geträgerten Katalysatoren jede beliebige Form aufweisen, z. B. Kugeln, Stäbchen, Raschigringe oder Granulat oder Tabletten.

Die Zusammensetzung der Katalysatoren in den erfindungsgemäß verwendeten Katalysatorbetten kann gleich oder verschieden sein. In einer bevorzugten Ausführungsform werden in jedem Katalysatorbett die gleichen Katalysatoren verwendet. Man kann aber auch vorteilhaft verschiedene Katalysatoren in den einzelnen Katalysatorbetten verwenden. So kann insbesondere in dem ersten Katalysatorbett, wenn die Konzentration der Umsetzungsprodukte noch hoch ist, ein weniger aktiver Katalysator verwendet werden und in den weiteren Katalysatorbetten die Aktivität des Katalysators von Katalysatorbett zu Katalysatorbett gesteigert werden. Die Steuerung der Katalysatoraktivität kann auch durch Verdünnung mit Inertmaterialien bzw. Trägermaterial erfolgen.

Mit dem erfindungsgemäßen Verfahren können pro 1 g Katalysators 0,1 g/h bis 10 g/h Chlor, bevorzugt 0,5 g/h bis 5 g/h Chlor hergestellt werden. Das erfindungsgemäße Verfahren zeichnet sich somit durch hohe Raumzeitausbeuten aus, verbunden mit einer Verringerung der Apparategrößen sowie einer Vereinfachung der Apparaturen bzw. Reaktoren.

Das Edukt für das erfindungsgemäße Verfahren ist Chlorwasserstoff, das z.B. als Koppelprodukt aus der Phosgenierung von organischen Aminen, insbesondere Diaminen zu Isocyanaten, insbesondere Diisocyanaten oder der Gasphasenphosgenierung von Phenol zu Diphenylcarbonat produziert und übernommen wird.

Sauerstoff kann als reiner Sauerstoff oder bevorzugt in Form eines sauerstoffenthaltenden Gases, insbesondere Luft, zugeführt werden.

Das produzierte Chlor kann z.B. zur Herstellung von Phosgen eingesetzt werden und ggf. in verbundene Produktionsprozesse rückgeführt werden.

Weiter beschrieben ist ein Reaktorsystem zur Umsetzung eines Chlorwasserstoff und Sauerstoff enthaltenden Gases, wenigstens enthaltend Zuleitungen für Chlorwasserstoff und Sauerstoff oder für ein Gemisch von Chlorwasserstoff und Sauerstoff und mindestens zwei hintereinander geschaltete thermisch isolierte Katalysatorbetten.

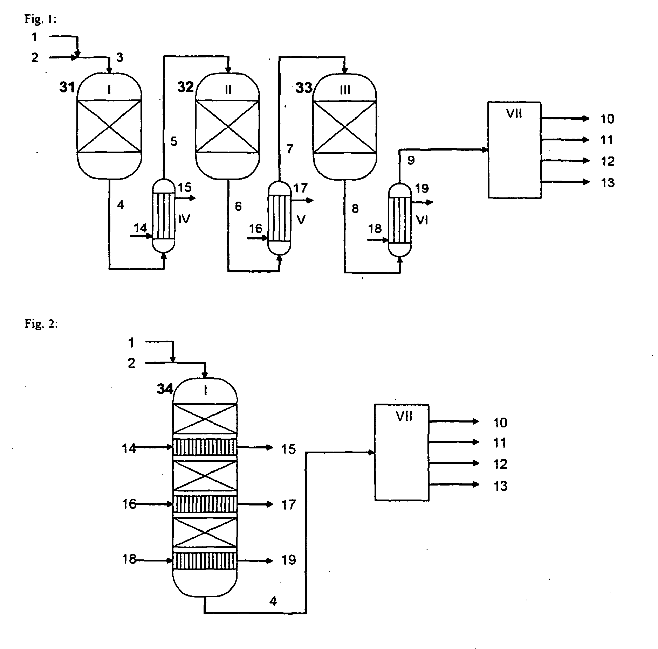

Bevorzugte Ausführungsbeispiele des erfindungsgemäßen Verfahrens sind in den Fig. 1 bis 4 dargestellt, ohne dass die Erfindung darauf begrenzt ist.

### Beispiele

### Beispiel 1

Fig. 1 zeigt das erfindungsgemäße Verfahren mit drei Katalysatorbetten in Reihe aufgeteilt auf drei separate Reaktoren. Vor dem ersten Reaktor werden die Eduktgase gemischt und dem Reaktor zugeführt. Nach jedem der Reaktoren wird das austretende Produktgas mit einem Rohrbündelwärmetauscher üblicher Bauart abgekühlt. Nach Austritt aus dem dritten Wärmetauscher werden aus dem Produktgas Chlor und Wasser abgetrennt.

### Beispiel 2

Fig. 2 zeigt das erfindungsgemäße Verfahren mit drei Katalysatorbetten in Reihe in einem integrierten Reaktor. Vor dem Reaktor werden die Eduktgase gemischt und diesem zugeführt. Nach jedem der Katalysatorbetten wird das austretende Produktgas mit einem ebenfalls in den Druckbehälter des Reaktors integrierten Wärmetauscher abgekühlt. Nach Austritt aus dem Reaktor werden aus dem Produktgas Chlor und Wasser abgetrennt.

### Beispiel 3

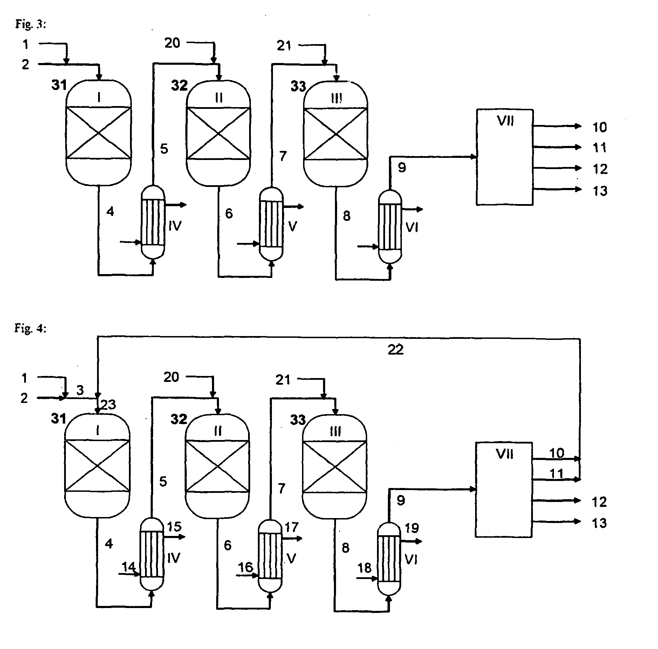

Fig. 3 zeigt das erfindungsgemäße Verfahren nach einem Aufbau, der weitgehend dem in Fig. 1 dargestellten entspricht. Abweichend wird vor dem zweiten und dritten Reaktor in Reihe dem abgekühlten Produktgas des vorangehenden Reaktors frisches Eduktgas zugeführt.

### Beispiel 4

Fig. 4 zeigt das erfindungsgemäße Verfahren nach einem Aufbau, der weitgehend dem in Fig. 3 dargestellten entspricht. Abweichend werden aus dem Produktgasstrom abgetrennter Chlorwasserstoff und Sauerstoff zurückgeführt und dem Eduktgasstrom vor dem ersten Reaktor zugemischt.

### Beispiel 5

### Durchführungsbeispiel

Chlor wurde durch die katalytische Gasphasenoxidation von Chlorwasserstoff mit Sauerstoff in einer Versuchsanlage hergestellt. Als Katalysator wurde calciniertes Rutheniumchlorid auf Zinndioxid als Trägermaterial verwendet. Die Versuchsanlage bestand aus sechs hintereinander geschalteten Reaktoren mit jeweils einem thermisch isolierten Katalysatorbett. Zwischen den Reaktoren befand sich jeweils ein Wärmetauscher, also insgesamt fünf, die den vom jeweils vorgeschalteten Reaktor kommenden Gasstrom auf die gewünschte Eintrittstemperatur des jeweils nachgeschalteten Reaktors abgekühlt haben. Sauerstoff (29 kg/h) wurde zusammen mit Stickstoff (25 kg/h) und Kohlenstoffdioxid (13,5 kg/h) über einen elektrischen Vorheizer auf ca. 305 °C erwärmt und dem ersten Reaktor zugeführt. Der Chlorwasserstoff (47,1 kg/h) wurde auf ca. 150 °C erwärmt und anschließend auf insgesamt 6 Teilströme aufgeteilt. Jeweils ein Teilstrom Chlorwasserstoff wurde jeweils einem Reaktor zugeführt, wobei beim ersten Reaktor der Chlorwasserstoffteilstrom in den Gasstrom, bestehend aus Sauerstoff, Stickstoff und Kohlendioxid, zwischen dem elektrischen Vorheizer und dem Reaktoreingang zugegeben wurde. Die weiteren Chlorwaserstoffteilströme wurden jeweils dem Gasstrom vor einem der fünf Wärmetauscher zugeführt. Tabelle 1 zeigt für alle sechs Reaktoren die Temperatur des eintretenden und austretenden Gasgemisches sowie die dem Reaktor jeweils zugeführte Menge Chlorwasserstoff. Der Gesamtumsatz an Chlorwasserstoff lag bei 82,4 %.

**Tabelle 1:**

| Reaktornummer | Chlorwasserstoffteilstrom [kg/h] | Eintrittstemperatur [°C] | Austrittstemperatur [°C] |
|---|---|---|---|
| 1 | 10.5 | 290.4 | 381.0 |
| 2 | 7.3 | 321.5 | 377.0 |
| 3 | 6.7 | 332.8 | 379.3 |
| 4 | 7.0 | 332.2 | 376.7 |
| 5 | 8.2 | 332.0 | 373.1 |
| 6 | 7.4 | 332.9 | 367.5 |

### Die Bezugszeichen bedeuten:

- 1: Chlorwasserstoff (Edukt)
- 2: Sauerstoff (Edukt)
- 3: Gemischter Eduktgasstrom
- 4, 5, 6: Produktgase der Reaktoren
- 7, 8, 9: durch Wärmetauscher gekühlte Produktgase
- 10: Chlorwasserstoff (aus Produktgas)
- 11: Sauerstoff (aus Produktgas)
- 12: Chlor
- 13: Wasser
- 14, 16, 18: Zuführung von Kühlmedium
- 15, 17, 19: Abführung von Kühlmedium
- 20,21: Zuführung frischen Eduktgases (Chlorwasserstoff und/oder Sauerstoff)
- 22: Rückführung aus dem Produktgas abgetrennten Chlorwasserstoffs und/oder Sauerstoffs

- I, II, III,: Reaktorschüttungen
- IV, V, VI: Wärmetäuscher
- VII: Stofftrennung für den Produktstrom nach dem Stand der Technik.

## Patentansprüche

1. Verfahren zur Herstellung von Chlor durch katalytische Gasphasenoxidation von Chlorwasserstoff mit Sauerstoff, das mindestens umfasst: Umsetzung von Chlorwasserstoff mit Sauerstoff an mindestens zwei hintereinander geschalteten Katalysatorbetten unter adiabatischen Bedingungen.

2. Verfahren nach Anspruch 1, **dadurch gekennzeichnet, dass** die Temperatur des Katalysators in den Katalysatorbetten insbesondere während der Reaktion 150 °C bis 800 °C beträgt.

3. Verfahren nach wenigstens einem der Ansprüche 1 bis 2, **dadurch gekennzeichnet, dass** das aus mindestens einem Katalysatorbett austretende Prozessgasgemisch anschließend über wenigstens einen dem Katalysatorbett nachgeschalteten Wärmetauscher geleitet wird.

4. Verfahren nach Anspruch 3, **dadurch gekennzeichnet, dass** sich nach jedem Katalysatorbett wenigstens ein Wärmetauscher befindet, über den das austretende Prozessgasgemisch geleitet wird.

5. Verfahren nach Anspruch 3 oder 4, **dadurch gekennzeichnet, dass** die in den Wärmetauschern abgeführte Reaktionswärme zur Dampfgewinnung eingesetzt wird.

6. Verfahren nach wenigstens einem der Ansprüche 1 bis 5, **dadurch gekennzeichnet, dass** die Umsetzung bei einem Druck von 1 bis 30 bar durchgeführt wird.

7. Verfahren nach wenigstens einem der Ansprüche 1 bis 6, **dadurch gekennzeichnet, dass** die Eingangstemperatur des in ein erstes Katalysatorbett eintretenden Gasgemisches von 150 bis 400 °C beträgt.

8. Verfahren nach Anspruch 7, worin die Eingangstemperatur des in jedes der Katalysatorbetten eintretenden Gasgemisches von 150 bis 400 °C beträgt.

9. Verfahren nach einem der Ansprüche 1 bis 8, **dadurch gekennzeichnet, dass** die nacheinander geschalteten Katalysatorbetten bei von Katalysatorbett zu Katalysatorbett steigender oder sinkender Durchschnittstemperatur betrieben werden.

10. Verfahren nach einem der Ansprüche 1 bis 9, **dadurch gekennzeichnet, dass** das molare Verhältnis von Sauerstoff zu Chlorwasserstoff vor Eintritt in jedes Katalysatorbett 0,25 bis 10 Äquivalente Sauerstoff pro Äquivalent Chlorwasserstoff beträgt.

11. Verfahren nach wenigstens einem der Ansprüche 1 bis 10, **dadurch gekennzeichnet, dass** die Umsetzung in 2 bis 12hintereinander geschalteten Katalysatorbetten durchgeführt wird

12. Verfahren nach einem der Ansprüche 1 bis 11, **dadurch gekennzeichnet, dass** der Chlorwasserstoff und Sauerstoff enthaltende Einsatz-Gasstrom nur dem ersten der mindestens zwei hintereinander geschalteten Katalysatorbetten zugeführt wird.

13. Verfahren nach einem der Ansprüche 1 bis 12, **dadurch gekennzeichnet, dass** vor einem oder mehreren dem ersten Katalysatorbett nachgeordneten Katalysatorbetten frischer Chlorwasserstoff und/oder Sauerstoff in den Prozessgasstrom eindosiert werden.

14. Verfahren nach einem der Ansprüche 1 bis 13, **dadurch gekennzeichnet, dass** der Katalysator wenigstens ein Element aufweist, das aus der Gruppe ausgewählt ist, die besteht aus: Kupfer, Kalium, Natrium, Chrom, Cer, Gold, Bismut, Ruthenium, Rhodium, Platin, sowie ein Element der VIII. Nebengruppe des Periodensystems der Elemente.

15. Verfahren nach einem der Ansprüche 1 bis 14, **dadurch gekennzeichnet, dass** der Katalysator auf Ruthenium oder einer Rutheniumverbindung basiert.

16. Verfahren nach einem der Ansprüche 1 bis 15, **dadurch gekennzeichnet, dass** die Aktivität der Katalysatoren in den einzelnen Katalysatorbetten verschieden und insbesondere von Katalysatorbett zu Katalysatorbett ansteigend ist.

17. Verfahren nach einem der Ansprüche 1 bis 16, **dadurch gekennzeichnet, dass** der Katalysator der Katalysatorbetten auf einem inerten Träger aufgebracht ist.

18. Verfahren nach Anspruch 17, **dadurch gekennzeichnet, dass** der Katalysatorträger vollständig oder teilweise aus Titanoxid, Zinnoxid, Aluminiumoxid, Zirkoniumoxid, Vanadiumoxid, Chromoxid, Siliziumoxid, Kieselerde, Kohlenstoffnanoröhren, oder einer Mischung oder Verbindung der genannten Stoffe besteht.

## Claims

1. Process for preparing chlorine by catalytic gas phase oxidation of hydrogen chloride with oxygen, comprising at least the following: reaction of hydrogen chloride with oxygen over at least two catalyst beds connected in series, under adiabatic conditions.

2. Process according to Claim 1, **characterized in that** the temperature of the catalyst in the catalyst beds is more particularly during the reaction 150°C to 800°C.

3. Process according to at least one of Claims 1 and 2, **characterized in that** the process gas mixture emerging from at least one catalyst bed is subsequently passed over at least one heat exchanger downstream of the catalyst bed.

4. Process according to Claim 3, **characterized in that** after each catalyst bed there is at least one heat exchanger over which the emerging process gas mixture is passed.

5. Process according to Claim 3 or 4, **characterized in that** the heat of reaction removed in the heat exchangers is utilized for vapour recovery.

6. Process according to at least one of Claims 1 to 5, **characterized in that** the reaction is carried out under a pressure of 1 to 30 bar.

7. Process according to at least one of Claims 1 to 6, **characterized in that** the entry temperature of the gas mixture entering a first catalyst bed is from 150 to 400°C.

8. Process according to Claim 7, in which the entry temperature of the gas mixture entering each of the catalyst beds is from 150 to 400°C.

9. Process according to any of Claims 1 to 8, **characterized in that** the catalyst beds connected in series are operated with an average temperature falling or rising from catalyst bed to catalyst bed.

10. Process according to any of Claims 1 to 9, **characterized in that** the molar ratio of oxygen to hydrogen chloride before entry into each catalyst bed is 0.25 to 10 equivalents of oxygen per equivalent of hydrogen chloride.

11. Process according to at least one of Claims 1 to 10, **characterized in that** the reaction is carried out in 2 to 12 catalyst beds connected in series.

12. Process according to any of Claims 1 to 11, **characterized in that** the feedstock gas stream comprising hydrogen chloride and oxygen is supplied only to the first of the at least two catalyst beds connected in series.

13. Process according to any of Claims 1 to 12, **characterized in that**, before one or more catalyst beds downstream of the first catalyst bed, fresh hydrogen chloride and/or oxygen are metered into the process gas stream.

14. Process according to any of Claims 1 to 13, **characterized in that** the catalyst comprises at least one element selected from the group consisting of copper, potassium, sodium, chromium, cerium, gold, bismuth, ruthenium, rhodium, platinum, and an element from transition group VIII of the Periodic Table of the elements.

15. Process according to any of Claims 1 to 14, **characterized in that** the catalyst is based on ruthenium or a ruthenium compound.

16. Process according to any of Claims 1 to 15, **characterized in that** the activity of the catalysts in the individual catalyst beds is different, and more particularly is increasing from catalyst bed to catalyst bed.

17. Process according to any of Claims 1 to 16, **characterized in that** the catalyst of the catalyst beds is applied on an inert support.

18. Process according to Claim 17, **characterized in that** the catalyst support is composed completely or partly of titanium oxide, tin oxide, aluminium oxide, zirconium oxide, vanadium oxide, chromium oxide, silicon oxide, siliceous earth, carbon nanotubes, or a mixture or compound of the substances stated.

## Revendications

1. Procédé de fabrication de chlore par oxydation catalytique en phase gazeuse de chlorure d'hydrogène avec de l'oxygène, qui comprend au moins : la mise en réaction de chlorure d'hydrogène avec de l'oxygène sur au moins deux lits catalytiques connectés en série en conditions adiabatiques.

2. Procédé selon la revendication 1, **caractérisé en ce que** la température du catalyseur dans les lits catalytiques est, notamment pendant la réaction, de 150 °C à 800 °C.

3. Procédé selon au moins l'une quelconque des revendications 1 à 2, **caractérisé en ce que** le mélange gazeux de procédé sortant d'au moins un lit catalytique est ensuite passé dans au moins un échangeur de chaleur connecté en aval du lit catalytique.

4. Procédé selon la revendication 3, **caractérisé en ce qu'**au moins un échangeur de chaleur se trouve après chaque lit catalytique, dans lequel le mélange gazeux de procédé sortant est passé.

5. Procédé selon la revendication 3 ou 4, **caractérisé en ce que** la chaleur de réaction dissipée dans les échangeurs de chaleur est utilisée pour l'obtention de vapeur.

6. Procédé selon au moins l'une quelconque des revendications 1 à 5, **caractérisé en ce que** la réaction est réalisée à une pression de 1 à 30 bar.

7. Procédé selon au moins l'une quelconque des revendications 1 à 6, **caractérisé en ce que** la température d'entrée du mélange gazeux entrant dans un premier lit catalytique est de 150 à 400 °C.

8. Procédé selon la revendication 7, dans lequel la température d'entrée du mélange gazeux entrant dans chacun des lits catalytiques est de 150 à 400 °C.

9. Procédé selon l'une quelconque des revendications 1 à 8, **caractérisé en ce que** les lits catalytiques connectés en série sont exploités à une température moyenne croissante ou décroissante de lit catalytique en lit catalytique.

10. Procédé selon l'une quelconque des revendications 1 à 9, **caractérisé en ce que** le rapport molaire entre l'oxygène et le chlorure d'hydrogène avant l'entrée dans chaque lit catalytique est de 0,25 à 10 équivalents d'oxygène par équivalent de chlorure d'hydrogène.

11. Procédé selon au moins l'une quelconque des revendications 1 à 10, **caractérisé en ce que** la réaction est réalisée dans 1 à 12 lits catalytiques connectés en série.

12. Procédé selon l'une quelconque des revendications 1 à 11, **caractérisé en ce que** le courant gazeux d'entrée contenant du chlorure d'hydrogène et de l'oxygène n'est introduit que dans le premier des deux lits catalytiques connectés en série ou plus.

13. Procédé selon l'une quelconque des revendications 1 à 12, **caractérisé en ce que** du chlorure d'hydrogène et/ou de l'oxygène frais sont introduits dans le courant gazeux de procédé avant un ou plusieurs lits catalytiques placés en aval du premier lit catalytique.

14. Procédé selon l'une quelconque des revendications 1 à 13, **caractérisé en ce que** le catalyseur comprend au moins un élément choisi dans le groupe constitué par : cuivre, potassium, sodium, chrome, cérium, or, bismuth, ruthénium, rhodium, platine, ainsi qu'un élément du groupe de transition VIII du tableau périodique des éléments.

15. Procédé selon l'une quelconque des revendications 1 à 14, **caractérisé en ce que** le catalyseur est à base de ruthénium ou d'un composé de ruthénium.

16. Procédé selon l'une quelconque des revendications 1 à 15, **caractérisé en ce que** l'activité des catalyseurs dans les lits catalytiques individuels est différente et notamment croissante de lit catalytique en lit catalytique.

17. Procédé selon l'une quelconque des revendications 1 à 16, **caractérisé en ce que** le catalyseur des lits catalytiques est appliqué sur un support inerte.

18. Procédé selon la revendication 17, **caractérisé en ce que** le support de catalyseur est constitué en totalité ou en partie d'oxyde de titane, d'oxyde d'étain, d'oxyde d'aluminium, d'oxyde de zirconium, d'oxyde de vanadium, d'oxyde de chrome, d'oxyde de silicium, de terre de diatomée, de nanotubes de carbone ou d'un mélange ou composé des substances citées.
